# EUROPÄISCHE PATENTSCHRIFT

(11) **EP 1 940 605 B1**
(45) Veröffentlichungstag und Bekanntmachung des Hinweises auf die Patenterteilung: **14.07.2010**
(21) Anmeldenummer: 06806337.9
(22) Anmeldetag: 17.10.2006
(51) Int. Cl.: B29C 73/22, B29C 73/18, B29C 73/16, B60C 19/12, B60C 5/04, B29C 47/00

(54) **PANNENSICHERE BEREIFUNG**
PUNCTURE-PROOF TIRE
PNEU INCREVABLE

(30) Priorität: 17.10.2005 DE 102005049526
(43) Veröffentlichungstag der Anmeldung: 09.07.2008
(73) Patentinhaber: Müller, Ralf, 41747 Viersen (DE)
(72) Erfinder: Müller, Ralf, 41747 Viersen (DE)
(74) Vertreter: Leifert & Steffan
(86) Internationale Anmeldenummer: PCT/EP2006/010005
(87) Internationale Veröffentlichungsnummer: WO 2007/045435

(56) Entgegenhaltungen:
- EP-A1- 1 201 461
- EP-A2- 1 405 716
- WO-A-00/43224
- WO-A-88/06539
- DE-A1- 19 839 911
- DE-C- 94 142
- DE-C- 437 673
- DE-C- 554 127
- JP-A- 2000 104 042
- US-A- 1 689 907
- US-A- 3 921 689
- US-A- 4 140 167
- US-A- 4 359 354

## Beschreibung

Die Erfindung betrifft eine pannensichere Bereifung für Fahrzeuge, z.B. für Automobile, Motorräder, Fahrräder, Kinderwagen, Rollstühle, Handkarren und dergleichen. Insbesondere betrifft die Erfindung einen Schlauchs für Fahrradreifen. Das Prinzip kann aber auch auf schlauchlose Fahrradreifen oder auf Kraftfahrzeugreifen angewendet werden.

Prinzipiell ist es zum Beispiel für die Bereifung von Rollstühlen bekannt, Reifen aus einem Vollmaterial einzusetzen. Ein solcher Reifen ist aber relativ schwer, federt Stöße schlecht ab und ist auch relativ teuer. Eine Alternative sind pneumatische Bereifungen. Diese sind allerdings pannenanfälliger, und sie müssen regelmäßig aufgepumpt werden.

Seit der Verwendung pneumatischer Bereifungen, d.h. schlauchloser pneumatischer Reifen und Bereifungen aus pneumatischen Schläuchen und sie aufnehmenden Mänteln, existieren Bestrebungen, Defekte der Luftkammern dieser pneumatischen Bereifung zu vermeiden bzw. entstandene Defekte zu beheben, um den weiteren Einsatz der pneumatischen Bereifung ohne einen umständlichen Wechsel des pneumatischen Reifens bzw. Schlauchs zu ermöglichen.

Im Stand der Technik gibt es folgende Möglichkeiten zur Reduzierung des Risikos bzw. zur Vermeidung eines Reifendefekts:

Produkte der Firma Ralf Bohle GmbH, Reichsdorf, lehren, den Fahrradreifen dicker (bis ca. 1 cm) zu gestalten. Dies kann zwar die meisten Reifenpannen vermeiden, längere Fremdkörper können aber den Mantel durchdringen. Außerdem haben diese Reifen einen größeren Rollwiderstand als einfache Reifen und sind relativ teuer.

Die im Handel erhältlichen Produkte der Firma Michelin, Clermont-Ferrand, Frankreich, lehren, den Fahrradschlauch dicker (ca. 5 mm) zu gestalten. Auch dieser kann jedoch von längeren Fremdkörpern durchdrungen werden.

Ähnlich ist auch der in der DE 118736 offenbarte Luftschlauch gestaltet, der im ausgedehnten Zustand so mit einem Gummistreifen beklebt wurde, dass dieser im nicht ausgedehnten Zustand eine starke Kompression erfährt. Wird die Lauffläche durch Eindringen eines scharfen Gegenstandes verletzt, so kann sich die betreffende Öffnung sofort wieder selbsttätig schließen. Auch dies erfolgt jedoch nur, wenn der eindringende Gegenstand keine zu großen Löcher erzeugt.

Produktentwicklungen der Firmen Ralf Bohle GmbH, Michelin und der Continental AG, Hannover, lehren, den Fahrradreifen mit einem reißfesten Gewebe (z.B. Kevlar) zu verstärken. Scharfe und eckige Fremdkörper können dies jedoch unter Umständen durchtrennen.

Bei einem Reifen der Chariots All Terrain Pushchairs, Spreyton, UK wird eine Einlage aus Kunststoff zwischen dem Schlauch und dem Mantel eingefügt. Auch diese kann jedoch durchdringen werden und vermindert weiterhin die Elastizität gegen Stöße und erhöht den Rollwiderstand.

Produkte der Firma Aerotube Technology LLC, Cornville, USA lehren, einen Schlauch mit einer Füllung aus Schaum o.ä. zu verwenden. Im Laufe der Zeit lässt die Stabilität dieser Schläuche jedoch nach, ihr Rollwiderstand ist höher, sie können Stöße nicht gurt abfedern, und sie können bei einem Reifenwechsel nicht wieder verwendet werden.

Die DE 437673 lehrt die Verwendung eines Zweikammerluftschlauchs, dessen nach dem Laufmantel zu liegende Kammer gegen Verletzungen des Schlauchs mit Schwammgummi gefüllt ist, wobei der Schwammgummi mit einer der Kammerwände verbunden und mit einer Dichtflüssigkeit getränkt ist. Die Fähigkeit, größere Löcher zu flicken, ist jedoch bei diesem Schlauch vermindert.

In der DE 94142 wird ein selbstdichtender Luftreifen beschrieben, bei dem eine Schicht unvulkanisierten Gummis zum Zweck der Verhütung der Oxidation und des Erhärtens des unvulkanisiertem Gummis und zur Sicherung seiner Lage an der erforderlichen Stelle in einer hermetisch abgeschlossenen Tasche oder Kammer untergebracht ist. Dies nicht vulkanisierte Gummi hat jedoch den Nachteil, dass es mit der Zeit durchhärtet und somit im Falle eines Reifendefektes nicht mehr abdichtend wirken kann. Ähnliche selbstdichtende Luftreifen bzw. Schläuche, bei denen sich in einer Tasche ein Dichtmittel befindet, werden in der US 2003%205308, der US 1,689,907 und der EP 1 201 431 beschrieben. Bei einem durch ein großes Objekt verursachten Schaden des Luftreifens kann das Dichtmittel das Loch jedoch nicht vollständig verschließen und läuft stattdessen aus der Tasche aus.

Bekannt ist auch, ein Gel in den Schlauch zu füllen. Dies Gel wird vorbeugend oder nach dem Auftritt eines. Defektes durch das Ventil in den Schlauch gegeben. Es bildet zusammen mit der austretenden Luft im Falle eines Defektes einen Pfropfen, der das Loch verschließt. Hierbei kann das Loch zum Beispiel durch kleine Fäden verstopft werden. Dabei kann jedoch immer noch Luft austreten. Es muss also eine Luftpumpe mitgeführt werden. Größe Löcher können weiterhin nicht geflickt werden. Durch derartige Gele können, je nach Einsatzgebiet, nur Löcher in der Bereifung mit einem Objektdurchmesser von maximal 3 mm (Fahrradreifen) bzw. maximal 10 mm (Autoreifen) geflickt werden, da die im Handel erhältlichen Dichtgele je nach Spezifikation mit unterschiedlicher Viskosität und mit unterschiedlichen Anteilen weiterer Bestandteile formuliert sind (vgl. Angaben für das Dichtgel der Marke Profex der Firma Stinnes-Intertec sowie für das Reifendichtgel Dr. Loc der TERRA-S Automotive Systems GmbH & Co. KG, Owingen). Diese unterschiedlichen Viskositäten und Anteile weiterer Bestandteile werden durch das gewünschte Fließverhalten im zu flickenden Reifen, welches vom Durchmesser des Reifens und der typischen Fahrgeschwindigkeit abhängt, bedingt. Außerdem kann auch das Ventil durch die Befüllung mit dem Dichtgel verkleben. Um letzteres zu vermeiden, hat die Firma Honda eine Reihe von Patentanmeldungen (z.B. JP-08-22502, EP 1 201 461 und DE 699 03 876) formuliert.

Hieraus ergibt sich, dass eine mehrschichtige Gestaltung und die Verwendung von Gelen bekannt ist. Bei den Patentanmeldungen der Firma Honda versucht sich das Gummi, das zwischen der Luftkammer und der Dichtmittelkammer ist, zur Luftkammer hin zusammen zu ziehen. Dadurch ist der Druck in der Dichtmittelkammer niedriger als in der Luftkammer. Bei Durchdringung dieses Gummis dringt Luft von der Luftkammer in die Dichtmittelkammer ein, und auch Gel kann durch das Loch treten. Das Gummi entspannt sich, bis es gradlinig ist. Eine weitere Pannensicherheit ist nicht mehr gewährleistet.

WO 88/06539 beschreibt einen dichten Behälter für eine Flüssigkeit**,** der bei einer Punktion selbstabdichtend ist. Der Behälter umfasst mindestens eine vorkomprimierte oder nicht vorkomprimierte Schicht, die der Behälterwand benachbart oder in diese integriert ist und deren Moleküle in Jede Richtung gegeneinander komprimierbar sind, wenn ein Druckunterschied zwischen der Innen-und der Außenseite des Behälters besteht. Die Lehre der Erfindung kann auch in einem Fahrzeugreifen, einem Innenschlauch für einen Reifen und einem Substrat, das an mindestens einer Wand eines Behälter angebracht ist, verwirklicht werden. Dieses Substrat umfasst mindestens eine vorkomprimierte oder nicht vorkomprimierte Schicht, deren Moleküle in Jede Richtung gegeneinander komprimierbar sind, wenn genannter Druck auf den Behälter, den Innenschlauch, die Kammer oder die Ummantelung ausgeübt wird. Dieses Substrat kann aus einem Schaumgrundmaterial bestehen, das beispielsweise mit einer Silikongallerte Imprägniert ist.

DE 554 127 C beschreibt einen Polsterrelfen mit herzförmiger Luftkammer, in welchem das der Herzform angepasste Polster eine abgestufte Elastizität aufweist und in einer Hülle mit Verstärkungsunterlage eingeschlossen ist. Das pneumatische Polster besitzt eine Nachgiebigkeit verschiedener Grade und ist so ausgebildet, dass die pneumatische Kammer gegen Verletzungen durch Stiche gesichert ist.

DE 94 142 C beschreibt einen Im Inneren mit einer Schicht von unvulkanlslertem Gummi versehenen selbstschließenden Luftreifen für Fahrräder und dergleichen, bei welchem zum Zweck des Verhütens der Oxidation und des Erhärtens des unvulkanisierten Gummis und zur Sicherung seiner Lage an der erforderlichen Stelle, ohne dass die Nachgiebigkeit des Reifens darunter leidet, der unvulkanlslerte Gummi In einer hermetisch abgeschlossenen Tasche oder Kammer untergebracht Ist, die aus einzelnen Teilen von vulkanisiertem Gummi gebildet Ist.

JP 2000 104042 A beschreibt ein Reifenpannen-Vorbeugungsmfttel, welches das Austreten von Luft beispielsweise nach einem Nagelstich verhindern kann, wenn zuvor eine geringe Menge dieses Reifenpannen-Vorbeugungsmittels in einen pneumatischen Fahrrad- oder Motorrad-Reifen injiziert wird. Es ist besonders für Schlauchreifen, schlauchlose Reifen, Doppelschlauchreifen mit einer Luftkammer und einer Pannenvorbeugekammer und dergleichen geeignet und enthält 100 Gewichtsteile Wasser, 0,2 - 20 Gewichtsteile eines Polysaccharid-Derivats, 0,1 - 1,0 Gewichtsteile von in Wasser aufquellenden feinen polymeren Gelpartikeln als Viskositätsregulator, 1 - 20 Gewichtsteile kurzer Fasern mit einer muitlverzweigten Struktur und einer durchschnittlichen Faserlänge von nicht weniger als 0,1 mm, und 20 - 200 Gewichtsteile eines C2-C4-Glykols und/oder eines C1-C4-Alkohols.

WO 00/43224 beschreibt einen Reifen und ein Verfahren zu seiner Herstellung, wobei in eine Reifenummentelung eine elastische Matrix eingebracht wird, die dann zwischen einem Schlauch oder einer zurückgehaltenen Luftmenge unter Druck und der Reifenummantelung positioniert wird. Die elastische Matrix umfasst ein Gemisch von Partikeln, die aus bestehenden Reifen abgeschabt und dann mit einem elastischen Material verbunden und in eine Form gebracht wurden, die zusammen mit anderen Formen der elastischen Matrix die Füllung bereitstellt. Die anderen Formen oder Segmente weisen eine Form auf, die beim Einbringen in eine Ummantelung leicht gehandhabt werden kann, und können eine solche Größe aufweisen, dass sie sich zunächst in einer ersten Position zwischen einem inneren Rand einer Reifenummantelung anordnen, aber dann gedreht werden, so dass sie effektiv gegen die gesamte innere Oberfläche eines Teils einer Reffenummantelung einrücken. Der Schlauch selbst kann mit einem Material aufgepumpt werden, das den Schlauch füllt und gegen die Segmente drückt, so dass sie effektiv am Platz gehalten werden. Alternativ kann bei schlauchlosen Reifen das Material unter Druck in einen bellebigen Leerraum innerhalb des Reifens gepumpt werden, bis das Material sich setzt. Wenn ein Schlauch verwendet wird, kann das festgesetzte Material danach selbst als Segmente in weiteren Reifen verwendet werden.

US 3,921,689 A beschreibt einen pneumatischen Reifen mit abdichtenden und aufplatzverhindernden Eigensachaften. Der Reifen besitzt eine aufblasbare Struktur aus einem elastischen Schaummaterial, das vorwiegend geschlossene Zellen in Form eines ringförmigen Bandes unterhalb der Lauffläche der Ummantelung in einer Breite, die mindestens der Breite der Lauffläche entspricht; sowie Vorrichtungen, um das Entweichen von Luft aus dem Gebiet zwischen der äußeren Oberfläche des ringförmigen Bandes und der entsprechenden inneren Oberfläche der Ummantelung verhindert. Der Reifen kann auch ein Gürtelreifen sein.

Es ist somit Aufgabe der Erfindung, eine pannensichere Bereifung bereitzustellen, die auch pannensicher ist beim Eindringen langer, größerer und scharfer Fremdkörper, und die somit auch größere Löcher in der Bereifung zu flicken vermag. Insbesondere soll keine Luft aus der pannensicheren Bereifung austreten. Weiterhin soll die Mitnahme einer Luftpumpe nicht erforderlich sein. Schließlich soll eine entsprechende pannensichere Bereifung bereitgestellt werden, die die üblichen Anforderungen von Bereifungen erfüllt. Insbesondere soll diese einen entsprechenden Rollwiderstand und eine geeignet Elastizität gegen Stöße aufweisen. Weiterhin sollen entsprechende Bereifungen unter Verwendung eines Schlauchs den Einsatz einfacher, preisgünstiger Mäntel gestatten.

Diese Aufgabe wird gelöst durch eine pannensichere Bereifung nach Anspruch 1. Das gedehnte Gummi bzw. das gedehnte gummiartige Material will sich zur Dichtmittelkammer hin zusammenziehen, d.h. das Gummi bzw. das gummiartigen Material wirkt komprimierend auf den Inhalt der Dichtmittelkammer.

Bevorzugt befindet sich das Dichtmittel der pannensicheren Bereifung in mindestens einer von der Luftkammer abgeschlossenen Dichtmittelkammer,

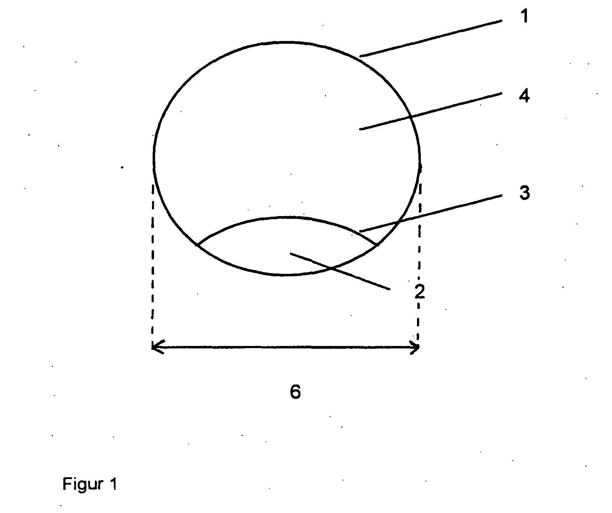

Die pannensichere Bereifung ist am Beispiel eines pannensicheren Schlauchs in der Figur 1 schematisch dargestellt. Im Bereich der Innenseite der Lauffläche bilden der Schlauch 1 und ein Gummi 3 eine Dichtmittelkammer. Das Gummi 3 ist von der Dichtmittelkammer aus betrachtet nach außen zur Luftkammer 4 hin gewölbt und gedehnt, so dass es sich zur Dichtmlttelkemmer hin zusammen ziehen will und dadurch In der Dichtmittelkammer eine Druckerhöhung bewirkt. Der Druck in dieser Dichtmittelkammer ist höher als in der Luftkammer 4. Die Dichtmittelkammer, d.h. das Gummi 3 und/oder die Innenseite der Lauffläche des Schlauchs, der die Dichtmittelkammer begrenzt, kann aus Materialien mit einem anderen E-Modul bestehen als der restliche Schlauch, um gegebenenfalls Gewicht einzusparen und um die Dehnung im Bereich einer Einstichstelle möglichst klein zu halten. Dies kann wegen der Definition der Form und der Druckerhöhung erforderlich sein. Bei einer Coextrusion können verschiedene Materialien zusammen extrudiert werden. In der Dichtmittelkammer ist ein Dichtmittel 2.

Das Dichtmittel ist so beschaffen, dass es durch normal mögliche Löcher bzw. Risse im Schlauch bzw. im Reifen nicht austreten kann bzw. sie sehr schnell verstopft. Dies kann z.B. durch mindestens einen zugesetzten Füllstoff erreicht werden. Als Füllstoffe sind in diesem Kontext Stoffe zu verstehen, die in dem Dichtmittel ungelöst vorliegen und eine ausreichende Größe und geeignete Gestalt haben, um z.B. durch ein Verkanten oder Verflechten miteinander einen mechanischen Verschluss eines Defekts der Bereifung zu bewirken. Insbesondere sind unter dem Füllstoff Fäden und/oder andere feste, klumpige Bestandteile zu verstehen.

Es können grundsätzlich übliche Füllstoffe verwendet werden, wie Gummi-Partikel, Cellulose, Carbonate, Silikate, Kieselerde und dergleichen sowie Mischungen davon. Als faserige Füllstoffe, d.h. Fäden, können zusätzlich dazu oder alternativ insbesondere Cellulosefasern, Glasfasern, Nylonfasern und/oder Baumwollfasern sowie flächenförmige Gewebestücke der genannten Fasern eingesetzt werden.

Derartige Füllstoffe sind vorzugsweise in einer Menge von mindestens 0,1 Gew.-%, insbesondere in einer Menge von 0,1 Gew.-% bis 5 Gew.-% bezogen auf das Gesamtgewicht des Dichtmittels, enthalten.

Bevorzugt umfasst das Dichtmittel ein Gel. Weiter bevorzugt umfasst das Dichtmittel ein wässriges Gel. Es gibt bereits Gele, die aber für diesen Fall weiter optimiert werden können. Diese Gele enthalten üblicherweise mindestens ein Dichtmittel, einen Haftvermittler, Wasser und weiterhin optional z.B. Antigeliermittel, Dispergiermittel, Lösemittel, Farbstoffe, allgemein Konservierungsstoffe wie z.B. Antioxidantien, und Bakterizide, sowie Katalysatoren. Ein handelsübliches

Reifendichtgel für Nutzfahrzeuge (bis 80 km/h und 3,5 bar Reifendruck) kann Löcher bis zu einem Objektdurchmesser von 10 mm abdichten. Im Unterschied zu dem bekannten Verfahren mit den üblichen Reifendichtgelen für Fahrräder (Abdichtung bis 3 mm Objektdurchmesser) können hier mehr größere und klumpigere Bestandteile verwendet werden. Das erfindungsgemäß verwendete Reifendichtgel kann zähflüssiger sein, da es sich nicht durch die Zentrifugalkraft während des Fahrens verteilen muss.
Im Extremfall fließt das Dichtmittel nur unter Druck. Es kann durch den Druck in der Dichtmittelkammer plastisch verformt werden.

Das Dichtmittel kann bei der Herstellung des Schlauchs (s.u.) in die Dichtmittelkammer gespritzt werden. Dabei kann bereits bei der Herstellung ein Überdruck erzeugt werden. Nach der Montage des Schlauchs und des Reifens kann das Dichtmittel ungleichmäßig verteilt sein. Durch den Druck in der Dichtmittelkammer und durch die Fliehkräfte während des Fahrens kann es aber wieder weiter verteilt werden.

Hat ein Fremdkörper die Bereifung durchdrungen, so wird dadurch das Dichtmittel beim Herausziehen des Fremdkörpers wieder an die Stelle des Fremdkörpers gedrückt, das heißt, das Dichtmittel bewegt sich durch den höheren Druck in der Dichtmittelkammer im Vergleich zur Atmosphäre zu der äußeren Einstichstelle in der Schlauch- bzw. Reifenwand (und gegebenenfalls auch zu der inneren Einstichstelle im Gummi) und verschließt dort die Einstichöffnungen zunächst durch eine Blockierung mit dem Füllstoff und gegebenenfalls nachfolgend durch Aushärtung des Dichtmittels an der Luft. Dadurch kann keine Luft aus dem Schlauch austreten. Durch das Hineindrücken des Dichtgels zum Leck wirkt mehr Dichtgel abdichtend, als wenn nur etwas Material aus der Umgebung des Lecks durch Luftzug zum Leck hin gezogen wird, so dass größere Löcher abgedichtet werden können.

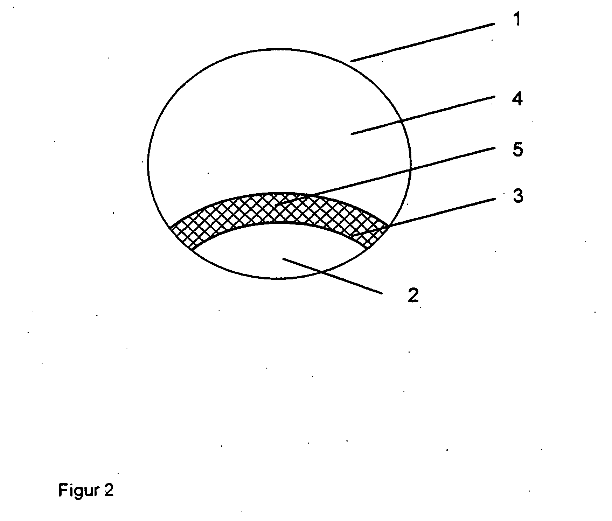

Ist das Dichtmittel 2 so beschaffen, dass es durch ein Loch im Gummi 3 oder im gummiartigen Material in die Luftkammer 4 eindringen kann, so kann dies von einem Gewebe 5 (vgl. Figur 2) verhindert werden. Als Gewebe ist in diesem Kontext jedes . Material zu verstehen, das aufgrund einer quervernetzten oder gewobenen Struktur nur schlecht von einem Fremdkörper durchdrungen werden kann und das somit eine Verstärkung des Gummis oder des gummiartigen Materials bewirkt. Insbesondere sind als Gewebe textile Gewebe aus natürlichen oder synthetischen Fasern, Gitter und Netze aus Metall oder Kunststoff sowie weiche Kunststoffe und Kunststoffschäume mit den genannten Eigenschaften zu verstehen. Bevorzugt ist das Gewebe elastisch. Das Gewebe ist vorzugsweise auf der zur Luftkammer hin orientierten Seite des Gummis oder des gummiartigen Materials angeordnet. Hierbei kann es sich z.B. um ein elastisches, luftdurchlässiges Gewebe (z.B. Schaumstoff, insbesondere PUR-Schaumstoff) handeln. Entweder schneidet der Fremdkörper ein kleines Loch in das Gewebe 5, oder es wird im Bereich des Fremdkörpers von dem Gummi oder dem gummiartigen Material weg gedrückt. Es kann höchstens nur ein kleiner Raum entstehen, der von dem Dichtmittel gefüllt werden kann, d.h. trotz einer möglichen Fremdkörperdurchdringung des Gummis oder des gummiartigen Materials kann das Dichtmittel nicht in die Luftkammer gelangen. Es bleibt genügend Dichtmittel zurück, um weitere Löcher zu stopfen.

Als Kraft gegen den Druck der austretenden Flüssigkeit kann das Gewebe z.B. direkt bei der Extrusion des Schlauchs in das Gummi oder das gummiartige Material hineingearbeitet werden, oder es wird anschließend auf das Gummi oder das gummiartige Material geklebt. Der Gegendruck kann auch von dem Gewebe selbst (wenn der Luftraum komplett ausgefüllt wird) oder einem weiteren Gummi erzeugt werden. Das heißt, das gummiartige Material, das das Dichtmittel gegen die Lauffläche der Bereifung drückt, kann identisch mit dem Gewebe sein.

Das Gewebe kann die. Luftkammer des Schlauchs ganz oder - wie in Figur 2 dargestellt - nur teilweise ausfüllen. Da das Gewebe zusammengedrückt werden kann, besteht kein Hindernis bei der Montage des Schlauchs auf die Felge. Es stellt auch keinen nennenswerten Widerstand beim Aufpumpen des Schlauchs dar.

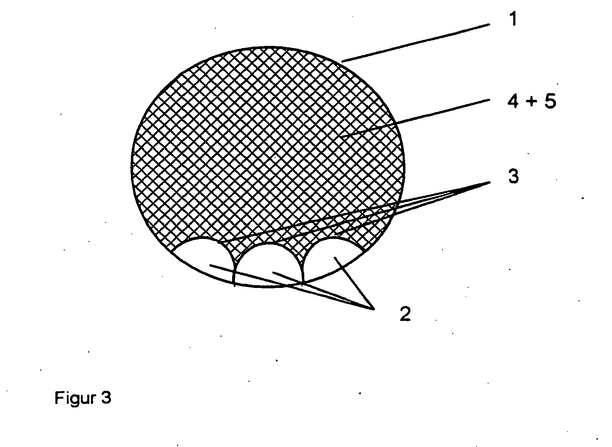

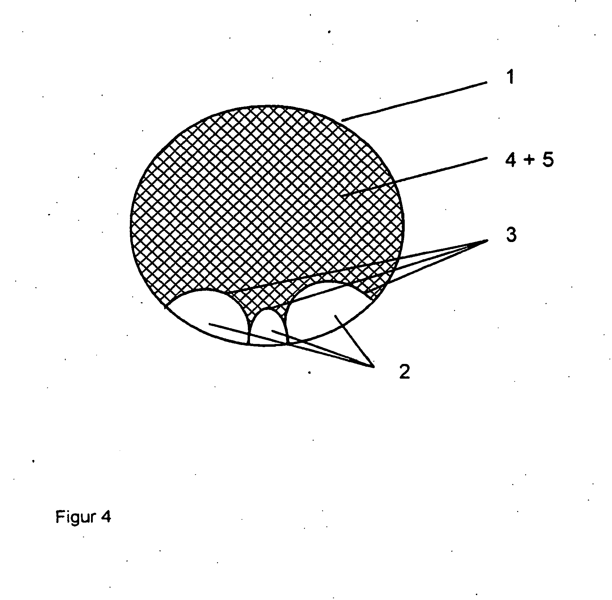

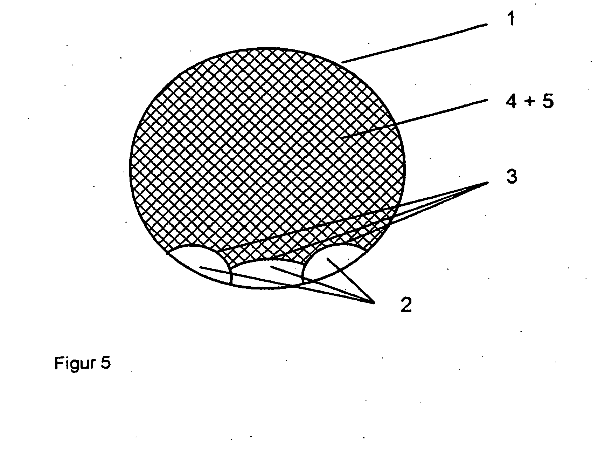

Eine andere Variante der Gestaltung der erfindungsgemäßen Bereifung am Beispiel eines Schlauchs zeigt Figur 3. Hier weist der Schlauch 1 mehrere kleinere Kammern für Dichtmittel 2 nebeneinander auf, d.h. anstelle einer im Bereich der Lauffläche befindlichen Dichtmittelkammer befinden sich in dieser Ausführungsform dort mehrere kleinere, die im wesentlichen nebeneinander angeordnet sind. Dadurch wird Dichtmittel 2 eingespart, und der Schlauch wird leichter. Das luftdurchlässige Gewebe 5 kann die ganze Luftkammer ausfüllen. Auch im Bereich der Trennwände zwischen den Dichtmittelkammern gibt es einen Pannenschutz. Am einfachsten geht dies, wenn die Dichtmittelkammern unterschiedlich groß sind, wie in Figur 4 dargestellt. Eine größere Kammer überragt dadurch eine kleinere Kammer und legt sich zum Teil auf sie, oder ihre Wände werden schräg zur Lauffläche sein, d.h. die Dichtmittelkammern weisen, wie in Figur 5 dargestellt, gemeinsame Trennwände auf, die nicht in Richtung des Bereifungsmittelpunktes hin orientiert sind. Ausführungsformen dieser erfindungsgemäßen Bereifung werden beispielhaft für einen Schlauch in den Figuren 3 bis 5 dargestellt. Es wird eine Form verursacht, bei der ein eindringender Körper in mindestens eine Dichtmittelkammer eindringen muss. Diese besonders bevorzugte Ausführungsform gewährleistet somit einen weiter verbesserten Pannenschutz, weil der eindringende Körper bei einer geeigneten Orientierung mehr Trennwände verletzen muss, bevor der Luftraum der Bereifung erreicht wird, und weil jedes durch ihn verursachte Loch in den Trennwänden durch Dichtmittel aus unterschiedlichen Dichtmittelkammern geflickt wird. Selbst im Falle einer kompletten Zerstörung einer Dichtmittelkammer steht somit noch Dichtmittel zur Reparatur der anderen Löcher zur Verfügung, so dass die Wahrscheinlichkeit erhöht wird, dass die Luftkammer intakt bleibt. Eine andere, aber weniger gute Möglichkeit ist, dass die gleich großen Kammern in der Höhe leicht versetzt sind. Hierfür muss das äußere Gummi, d.h. die Lauffläche des Schlauchs, unterschiedlich dick sein. Es kann auch ausreichen, wenn die Trennwände sehr dünn gestaltet werden. Auch kann eine weitere, kleine Dichtmittelkammer genau über der Trennfläche sein

Für Bereifungen auf Basis eines Mantels und eines Schlauchs ist der Einsatz beider Varianten sowohl für Gruppenschläuche, d.h. Schläuche mit einem definierten Durchmesser, aber variabler Breite, und für Spezialisten, d.h. Schläuche definierter Durchmesser und Breite, möglich.

Die erfindungsgemäße pannensichere Bereifung bietet einen besonders guten Pannenschutz für Schläuche bzw. Reifen mit einer Breite (vgl. Figur 1, dargestellt ist die Schlauchbreite 6) von kleiner als 120 mm, weiter bevorzugt kleiner als 100 mm, besonders bevorzugt kleiner als 70 mm. D.h., die erfindungsgemäße Bereifung ist besonders geeignet für einen Pannenschutz von Motorrädern, Fahrrädern, Kinderwagen, Rollstühlen, Handkarren und dergleichen. Ganz besonders geeignet ist die Erfindung für den Pannenschutz von Fahrrädern, Kinderwagen, Rollstühlen und Handkarren.

Bei der Extrusion der Bereifung, z.B. bei der Extrusion des Fahrradschlauchs können die Dichtmittelkammern in einem Arbeitsgang durch ein Werkzeug hergestellt werden. Das Gewebe kann ebenfalls direkt bei der Extrusion mit dem Gummi bzw. dem gummiartigen Material verbunden werden. Alternativ kann es auch anschließend auf das Gummi bzw. das gummiartige Material geklebt werden. Die einzelnen Schläuche werden dann abgelängt und das Ventil wird eingefügt. Das Gewebe kann anschließend in die abgelängten Stücke hineingeschäumt werden, oder es wird zum Schluß durch die Ventilöffnung in die Luftkammer geschäumt. Vor der Vulkanisation und der damit stattfindenden Verbindung der beiden Enden muss unter Umständen ein Steg am Gummi bzw. am gummiartigen Material angebracht werden. Die einzelnen Trennwände zwischen den Kammern müssen nicht (können aber) miteinander verbunden werden. Ein sowieso nur minimaler Material-, d.h. Dichtmittelaustausch zwischen den Kammern beeinträchtigt nicht ihre Effizienz. Eine andere Möglichkeit ist, dass ein Werkzeug an der Verbindungsstelle eingeführt wird, welches die einzelnen Gummis bzw. nur das Gummi bzw. das gummiartige Material an der Verbindungsstelle überlappend oder auf Stoß fixiert. Wenn nur das Gummi bzw. das gummiartige Material fixiert wird, dann kann das Werkzeug sowohl über die Dichtmittelkammer als auch über die Luftkammer eingeführt werden. Für die Vulkanisation wird sowohl in der Luftkammer (durch das Ventil) als auch in den Dichtmittelkammern ein Überdruck erzeugt. Die hierfür erforderlichen Öffnungen in den Dichtmittelkammern können auch für die Befüllung mit dem Dichtmittel benutzt werden. Vorzugsweise befinden sich diese Öffnungen der Dichtmittelkammern im Bereich der Lauffläche. Wurde ein über die Dichtmittelkammer eingeführtes Werkzeug bei der Vulkanisation verwendet, dann können hierfür auch diese Öffnungen benutzt werden. Sie können anschließend durch eine Kaltvulkanisation verschlossen werden. Alternativ können die Dichtmittelkammern auch mit einer Füllvorrichtung durch das Luftventil befüllt werden.

Wenn bei der Vulkanisation der Druck so hoch ist, dass die Vulkanisationstemperatur nicht über der entsprechenden druckabhängigen Siedetemperatur des Dichtmittels ist, dann kann das Dichtmittel auch schon vor der Vulkanisation in die Dichtmittelkammern gefüllt werden.

Der nicht aufgepumpte Schlauch wird durch das zusätzliche Material, d.h. die gefüllten Dichtmittelkammem, zwar dicker, dies ist aber bei der Montage kein Hindernis. Eine Möglichkeit ist z.B., eine Seite des Mantels über die Felge zu ziehen, ihn auf der Seite der Felge zu lassen, das Ventil durch die Öffnung der Felge zu stecken, den Schlauch in den Mantel zu legen, den Mantel weiter über die Felge zu schieben und die andere Seite des Mantels über den Feigenrand zu heben. Ein Verdrehen des Schlauches ist durch den Druck in der/den Dichtmittelkammer(n) ausgeschlossen.

Durch die vorliegende Erfindung werden auch größere Löcher im Schlauch abgeschlossen, ohne dass Luft austreten kann. Es können auch mehrere Löcher abgedichtet werden. Rollwiderstand und Elastizität gegen Stöße sind mit denen einfacher Schläuche vergleichbar. Die Schläuche können u.U. nach einem Reifenwechsel wieder verwendet werden. Das zusätzliche Gewicht wird in der Praxis unerheblich sein.

Dieser. Schlauch ermöglicht die Kombination mit einem vergleichsweise preiswerten Mantel bei besserem Pannenschutz und optimierten Rolleigenschaften.

## Patentansprüche

1. Pannensichere Bereifung aus einem pannensicheren Schlauch (1) und einem Mantel, wobei im Bereich der Innenseite der Lauffläche durch den pannensicheren Schlauch (1) und einem Gummi oder einem anderen gummiartigen Material (3) einem anderen gummiartigen Material (3) eine Dichtmittelkammer gebildet ist, in der ein Dichtmitel (2) von dem GUMMI oder dem anderen gummiartigen Material (3) gegen die Lauffläche der Bereifung gedrückt wird, so dass In dieser Dlchtmittelkammer ein höherer Druck als In der Luftkammer (4) ist des pannensicheren Schlauches (1), und wobei das Dichtmittel (2) mindestens einen Füllstoff umfasst, **dadurch gekennzeichnet, dass** das Gummi oder gummiartige Material (3) gedehnt ist.

2. Pannensichere Bereifung nach Anspruch 1, **dadurch gekennzeichnet, dass** das Dichtmittel (2) nur unter Druck fließt.

3. Pannensichere Bereifung nach einem der vorhergehenden Ansprüche, **dadurch gekennzeichnet, dass** das Dichtmittel (2) durch den Druck In der Dichtmlttelkammer plastisch verformt Ist.

4. Pannensichere Bereifung nach einem der vorhergehenden Ansprüche, **dadurch gekennzeichnet, dass** das Dichtmittel (2) der pannensicheren Bereifung In mindestens einer von der Luftkammer (4) abgeschlossenen Dichtmittelkammer enthalten ist.

5. Pannensichere Bereifung nach einem der vorhergehenden Ansprüche, **dadurch gekennzeichnet, dass** als Füllstoff Fasern und/oder klumpige Materialien verwendet werden.

6. Pannensichere Bereifung nach Anspruch 5, **dadurch gekennzeichnet, dass** als Füllstoff Fasern und klumpige Materiallen verwendet werden.

7. Pannensichere Bereifung nach einem der vorhergehenden Ansprüche, **dadurch gekennzeichnet, dass** das Dichtmittel (2) als mindestens einen Füllstoff Gummi-Partikel, Cellulose, Carbonate, Silikate. Kieselerde, Cellulosefasern, Glasfasern, Nylonfasern, Baumwollfasern und/oder flächenförmige Gewebestücke der genannten Fasern umfasst.

8. Pannensichere Bereifung nach einem der vorhergehenden Ansprüche, **dadurch gekennzeichnet, dass** das Dichtmittel (2) mindestens 0,1 Gew.-%, bevorzugt 0,1 Ges.-% bis 5 Ges.-% des mindestens einen Füllstoffs bezogen auf das Gesamtgewicht des Dichtmittels enthält.

9. Pannensichere Bereifung nach einem der vorhergehenden Ansprüche, **dadurch gekennzeichnet, dass** das Dichtmittel (2) ein Gel umfasst.

10. Pannensichere Bereifung nach Anspruch 9, **dadurch gekennzeichnet, dass** das Dichtmittel (2) ein wässriges Gel umfasst.

11. Pannensichere Bereifung nach einem der vorhergehenden Ansprüche, **dadurch gekennzeichnet, dass** ein Gewebe (5) ein Herausfileßen des Dichtmittels in den Innenraum des Schlauchs verhindert.

12. Pannensichere Bereifung nach Anspruch 11, **dadurch gekennzeichnet, dass** das Gewebe (5) elastisch ist.

13. Pannensichere Bereifung nach Anspruch 11 oder 12, **dadurch gekennzeichnet, dass** das Gewebe (5) auf der zur Luftkammer (4) hin orientierten Seite des Gummis bzw. des gummiartigen Materials (3) angeordnet ist.

14. Pannensichere Bereifung nach einem der Ansprüche 11 bis 13, **dadurch gekennzeichnet, dass** es sich bei dem Gewebe (5) um einen PUR-Schaum handelt.

15. Pannensichere Bereifung nach einem der Ansprüche 11 bis 14, **dadurch gekennzeichnet, dass** das Gewebe (5) die Luftkammer (4) ganz ausfüllt.

16. Pannensichere Bereifung nach einem der Ansprüche 11 bis 14, **dadurch gekenntzeichnet, dass** das Gewebe (5) die Luftkammer (4) teilweise ausfüllt.

17. Pannensichere Bereifung nach einem der vorhergehenden Ansprüche, **dadurch gekennzeichnet, dass** sie mehrere kleinere Dichtmitteikammem nebeneinander aufweist.

18. Pannensichere Bereifung nach Anspruch 17, **dadurch gekennzeichnet, dass** die Dichtmittelkammern unterschiedlich groß sind.

19. Pannensichere Bereifung nach Anspruch 18, **dadurch gekennzeichnet, dass** mindestens eine größere Kammer mindestens eine kleinere Kammer überragt und sich zum Teil auf sie legt.

20. Pannensichere Bereifung nach Anspruch 18, **dadurch gekennzeichnet, dass** die Dichtmittelkammern gemeinsame Trennwände aufweisen, die nicht In Richtung des Bereifungsmlttslpunktes hin orientiert sind.

21. Pannensichere Bereifung nach einem der vorhergehenden Ansprüche, **dadurch gekennzeichnet, dass** der Schlauch bzw. Reifen der Bereifung (1) eine Breite (6) von kleiner als 120 mm, weiter bevorzugt kleiner als 100 mm, besonders bevorzugt kleiner als 70 mm aufweist.

## Claims

1. Puncture-proof tyre assembly composed of a puncture-proof tube (1) and a casing, there being formed in the region of the inner side of the tread by the puncture-proof tube (1) and a rubber or another rubber-like material (3) a sealant chamber in which a sealant (2) is pressed against the tread of the tyre assembly by the rubber or the other rubber-like material (3) such that there is a higher pressure in this sealant chamber than in the air chamber (4) of the puncture-proof tube (1), and the sealant (2) comprises at least one filler, **characterized in that** the rubber or rubber-like material (3) is expanded.

2. Puncture-proof tyre assembly according to Claim 1, **characterized in that** the sealant (2) flows only under pressure.

3. Puncture-proof tyre assembly according to one of the preceding claims, **characterized in that** the sealant (2) is plastically deformed by the pressure in the sealant chamber.

4. Puncture-proof tyre assembly according to one of the preceding claims, **characterized in that** the sealant (2) of the puncture-proof tyre assembly is contained in at least one sealant chamber which is closed off from the air chamber (4).

5. Puncture-proof tyre assembly according to one of the preceding claims, **characterized in that** fibres and/or lumpy materials are used as filler.

6. Puncture-proof tyre assembly according to Claim 5, **characterized in that** fibres and lumpy materials are used as filler.

7. Puncture-proof tyre assembly according to one of the preceding claims, **characterized in that** the sealant (2) comprises, as at least one filler, rubber particles, cellulose, carbonates, silicates, silica, cellulose fibres, glass fibres, nylon fibres, cotton fibres and/or sheetlike fabric pieces of said fibres.

8. Puncture-proof tyre assembly according to one of the preceding claims, **characterized in that** the sealant (2) contains at least 0.1 % by weight, preferably 0.1 % by weight to 5% by weight, of the at least one filler with reference to the total weight of the sealant.

9. Puncture-proof tyre assembly according to one of the preceding claims, **characterized in that** the sealant (2) comprises a gel.

10. Puncture-proof tyre assembly according to Claim 9, **characterized in that** the sealant (2) comprises an aqueous gel.

11. Puncture-proof tyre assembly according to one of the preceding claims, **characterized in that** a fabric (5) prevents sealant from flowing out into the interior of the tube.

12. Puncture-proof tyre assembly according to Claim 11, **characterized in that** the fabric (5) is elastic.

13. Puncture-proof tyre assembly according to Claim 11 or 12, **characterized in that** the fabric (5) is arranged on the side, orientated towards the air chamber (4), of the rubber or the rubber-like material (3).

14. Puncture-proof tyre assembly according to one of Claims 11 to 13, **characterized in that** the fabric (5) is a polyurethane foam.

15. Puncture-proof tyre assembly according to one of Claims 11 to 14, **characterized in that** the fabric (5) completely fills up the air chamber (4).

16. Puncture-proof tyre assembly according to one of Claims 11 to 14, **characterized in that** the fabric (5) partially fills up the air chamber (4).

17. Puncture-proof tyre assembly according to one of the preceding claims, **characterized in that** it has a number of relatively small sealant chambers next to one another.

18. Puncture-proof tyre assembly according to Claim 17, **characterized in that** the sealant chambers are of different size.

19. Puncture-proof tyre assembly according to Claim 18, **characterized in that** at least one relatively large chamber projects beyond at least one relatively small chamber and partially lies on it.

20. Puncture-proof tyre assembly according to Claim 18, **characterized in that** the sealant chambers have common partitions that are not orientated in the direction of the tyre assembly midpoint.

21. Puncture-proof tyre assembly according to one of the preceding claims, **characterized in that** the tube or tyre of the tyre assembly (1) has a width (6) of less than 120 mm, further preferably less than 100 mm, with particular preference less than 70 mm.

## Revendications

1. Bandage pneumatique increvable constitué d'un manchon increvable (1) et d'une enveloppe,
une chambre à agent d'étanchéité étant formée dans la zone du côté intérieur de la surface de roulement par le manchon (1) increvable et un caoutchouc ou un autre matériau (3) du type caoutchouc,
un agent d'étanchéité (2) étant repoussé par le caoutchouc ou l'autre matériau (3) de type caoutchouc contre la surface de roulement du bandage de roue de telle sorte qu'une pression plus élevée règne dans cette chambre à agent d'étanchéité que dans la chambre à air (4) du manchon (1) increvable,
l'agent d'étanchéité (2) comprenant au moins une charge,
**caractérisé en ce que**
le caoutchouc ou le matériau (3) de type caoutchouc sont allongés.

2. Bandage de roue increvable selon la revendication 1, **caractérisé en ce que** l'agent d'étanchéité (2) ne s'écoule que sous pression.

3. Bandage de roue increvable selon l'une des revendications précédentes, **caractérisé en ce que** l'agent d'étanchéité (2) est déformé plastiquement par la pression qui règne dans la chambre à agent d'étanchéité.

4. Bandage de roue increvable selon l'une des revendications précédentes, **caractérisé en ce que** l'agent d'étanchéité (2) du bandage de roue increvable est contenu dans au moins une chambre à agent d'étanchéité fermée par la chambre à air (4).

5. Bandage de roue increvable selon l'une des revendications précédentes, **caractérisé en ce que** comme charge, on utilise des fibres et/ou des matériaux grumeleux.

6. Bandage de roue increvable selon la revendication 5, **caractérisé en ce que** comme charge, on utilise des fibres et des matériaux grumeleux.

7. Bandage de roue increvable selon l'une des revendications précédentes, **caractérisé en ce que** l'agent d'étanchéité (2) comprend comme charges des particules de caoutchouc, de la cellulose, des carbonates, des silicates, de la terre de diatomées, des fibres de cellulose, des fibres de verre, des fibres de nylon, des fibres de coton et/ou des pièces plates tissées desdites fibres.

8. Bandage de roue increvable selon l'une des revendications précédentes, **caractérisé en ce que** l'agent d'étanchéité (2) contient au moins 0,1 % en poids et de préférence de 0,1 % en poids à 5 % en poids de la ou des charges par rapport au poids total de l'agent d'étanchéité.

9. Bandage de roue increvable selon l'une des revendications précédentes, **caractérisé en que** l'agent d'étanchéité (2) contient un gel.

10. Bandage de roue increvable selon la revendication 9, **caractérisé en ce que** l'agent d'étanchéité (2) contient un gel aqueux.

11. Bandage de roue increvable selon l'une des revendications précédentes, **caractérisé en ce qu'**un tissu (5) empêche que l'agent d'étanchéité s'écoule dans l'espace intérieur du manchon.

12. Bandage de roue increvable selon la revendication 11, **caractérisé en ce que** le tissu (5) est élastique.

13. Bandage de roue increvable selon les revendications 11 ou 12, **caractérisé en ce que** le tissu (5) est disposé sur le côté du caoutchouc ou du matériau (3) de type caoutchouc orienté en direction de la chambre à air (4).

14. Bandage de roue increvable selon l'une des revendications 11 à 13, **caractérisé en ce que** le tissu (5) est une mousse de PUR.

15. Bandage de roue increvable selon l'une des revendications 11 à 14, **caractérisé en ce que** le tissu (5) remplit complètement la chambre à air (4).

16. Bandage de roue increvable selon l'une des revendications 11 à 14, **caractérisé en ce que** le tissu (5) ne remplit qu'une partie de la chambre à air (4).

17. Bandage de roue increvable selon l'une des revendications précédentes, **caractérisé en ce qu'**il présente plusieurs petites chambres à agent d'étanchéité situées les unes à côté des autres.

18. Bandage de roue increvable selon la revendication 17, **caractérisé en ce que** les chambres à agent d'étanchéité ont des tailles différentes.

19. Bandage de roue increvable selon la revendication 18, **caractérisé en ce qu'**au moins une plus grande chambre déborde d'au moins une plus petite chambre et repose en partie sur elle.

20. Bandage de roue increvable selon la revendication 18, **caractérisé en ce que** les chambres à agent d'étanchéité présentent des parois de séparation communes qui ne sont pas orientées en direction du centre du bandage de roue.

21. Bandage de roue increvable selon l'une des revendications précédentes, **caractérisé en ce que** le manchon et le bandage du bandage de roue (1) présentent une largeur (6) inférieure à 120 mm, de façon plus préférable inférieure à 100 mm et de façon particulièrement préférable inférieure à 70 mm.
